(19) Europäisches Patentamt / European Patent Office / Office européen des brevets

(11) **EP 2 385 390 B1**

(12) **EUROPEAN PATENT SPECIFICATION**

(45) Date of publication and mention
of the grant of the patent:
**21.08.2013 Bulletin 2013/34**

(51) Int Cl.:
**G01S 5/16** (2006.01)

(21) Application number: **11162770.9**

(22) Date of filing: **18.04.2011**

(54) **System and method for estimating position and direction**

System und Verfahren zur Positions- und Richtungsschätzung

Système et procédé d'évaluation de position et de direction

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2010 KR 20100038338**

(43) Date of publication of application:
**09.11.2011 Bulletin 2011/45**

(73) Proprietors:
• **Samsung Electronics Co., Ltd.
Suwon-si, Gyeonggi-do, 443-742 (KR)**
• **Korea Advanced Institute of Science and
Technology
Daejeon 305-701 (KR)**

(72) Inventors:
• **Bang, Won Chul
Gyeonggi-do 446-712 (KR)**

• **Lee, Hyong Euk
Gyeonggi-do 446-712 (KR)**
• **Kim, Sang Hyun
Gyeonggi-do 446-712 (KR)**
• **Lee, Gee Hyuk
Gyeonggi-do 446-712 (KR)**
• **Heo, Seong Kook
Gyeonggi-do 446-712 (KR)**
• **Han, Jae Hyun
Gyeonggi-do 446-712 (KR)**

(74) Representative: **D'Halleweyn, Nele Veerle Trees
Gertrudis
Arnold & Siedsma
Sweelinckplein 1
2517 GK Den Haag (NL)**

(56) References cited:
WO-A1-96/35960 WO-A1-2009/145854
US-A- 5 793 483 US-A1- 2003 107 737
US-B1- 6 355 925

**Description**

The present invention relates to a system according to the preamble of claim 1. One or more embodiments of the following description relate to a system for estimating a position and a direction of a target, and more particularly, to a motion sensing system that estimates a position and a direction of a target using attenuation characteristics of infrared light.

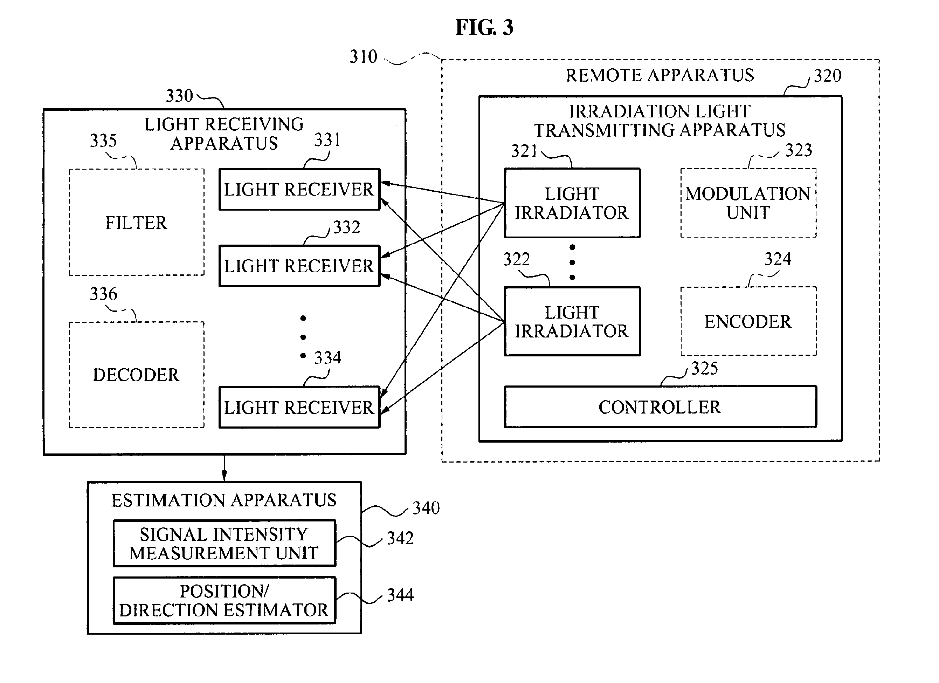

US 2003/107737 discloses an alignment system for aligning a first face plate 18a with a second face plate 18n, see figure 3. The first face plate 18a is provided with four infrared LED emitters 20a-20d and two infrared receivers 22a, 22b. In a similar way, face plate 18n is provided with four infrared LED emitters 30a-30d and two infrared receivers 32a, 32b.

WO 96/35960 discloses a system for determining the position and orientation of a moveable object in space relative to a stationary object having two transmitter units mounted in fixed, spaced relationship on a stationary console and two receiver units mounted on a headset or other moveable object. Each transmitter unit has a triplet of orthogonally arranged LEDs, each of which generates a hemispherical beam of radiation. Each receiver unit has six photodetectors, each of which has a plane of sensitivity such that the intensity of incident radiation is proportional to the cosine of the angle of incidence of the radiation. The six photodetectors are arranged such that they form four sets of three photodetectors with the photodetectors in each set having their planes of sensitivity arranged orthogonally.

Methods for estimating a three-dimensional (3D) position in space (hereinafter, 3D position) and a direction of a moving object or a target have been mainly used in the fields of movies, graphics, and animations, to sense motions of objects, human bodies, or animals in 3D space using relatively expensive and large-sized motion capture apparatuses.

However, as a motion sensing technology for consumer electronics (CE) associated with gaming industries are beginning to gain attention, a great number of methods of estimating a 3D position and a direction using a relatively inexpensive and small-sized motion capture apparatus have been developed.

Methods of estimating a 3D position are broadly divided into methods of using a camera, methods of using ultrasonic waves, and methods of using an inertial sensor.

Using a plurality of two-dimensional (2D) cameras, a position of a marker and a position of a light source bearing on a camera image may be converted into a 3D position. However, since accuracy varies depending on a camera resolution and a size of the marker, it is difficult to perform high-accuracy sensing.

When ultrasonic waves are used, a distance may be calculated by measuring a time of flight (TOF) of ultrasonic waves that travel through the air at about 340 meters per second (m/s), the speed of sound, from a transmitter to a receiver. Information regarding a distance between a target and at least three viewpoints may be acquired, and a 3D position of the target may be calculated using a triangulation method. Ultrasonic waves may enable high-accuracy sensing using relatively inexpensive equipment instead of relatively expensive equipment such as a camera. However, it is difficult to simultaneously transmit signals due to interference between ultrasonic waves, and it is also difficult to estimate a position of a moving object in real-time when considering a time for attenuating an ultrasonic signal in the air, (for example, ultrasonic signals may travel a 3 meter (m) distance in about 100 milliseconds (msec)).

When an inertial sensor is used, a 3D position may be estimated by integrating energy acceleration components calculated using an acceleration of energy, a gravitational acceleration, and an angle speed that are obtained using an acceleration sensor and a Gyro sensor. However, since errors are accumulated over time, a position may be estimated in only a short period of time. In other words, an inertial sensor is not suitable for estimation of a position over a long period of time.

One or more embodiments of the present disclosure describe an inexpensive and compact system and method for simultaneously estimating a position and a direction of a target using infrared light.

The system of the invention is distinguished by the features of the characterizing portion of claim 1. The system includes an irradiation light transmitting apparatus including at least one light irradiator to irradiate irradiation light, a light receiving apparatus including at least one light receiver to receive the irradiation light, a remote apparatus including one of the irradiation light transmitting apparatus or the light receiving apparatus, and an estimation apparatus to measure an attribute of the irradiation light received by each of the at least one

light receiver, and to estimate at least one of a position and a direction of the remote apparatus based on the measured attrubite.

The measured attribute may include one or more of an intensity of the irradiated light, a light receiving directivity of the irradiated light, and a light emitting directivity of the irradiated light.

When the irradiation light transmitting apparatus includes two light irradiators, the light receiving apparatus may include at least two light receivers. When the irradiation light transmitting apparatus includes at least three light irradiators, the light receiving apparatus may include at least one light receiver.

The irradiation light transmitting apparatus may include at least two light irradiators oriented in different directions at a predetermined angle.

The light receiving apparatus may include at least two light receivers, and a position and an orientation direction of each of the at least two light receivers may be set in advance.

The irradiation light transmitting apparatus may include at least two light irradiators, and may control the at least two light irradiators to sequentially irradiate irradiation lights.

The foregoing and/or other aspects are achieved by providing an irradiation light transmitting apparatus for use in estimating a position and a direction of a target. The apparatus includes at least two light irradiators to irradiate irradiation lights, the at least two light irradiators being oriented in different directions from each other, wherein the irradiation lights are used to estimate at least one of the position and the direction of the target based on a measured characteristic of each of the irradiation lights.

The foregoing and/or other aspects are achieved by providing a light receiving apparatus for use in estimating a position and a direction of a target. The apparatus includes at least two light receivers to receive irradiation lights oriented in different directions and emitted from at least two light irradiators, a position and an orientation direction of each of the at least two light receivers being set in advance, wherein the received irradiation lights are used to estimate at least one of the position and the direction of the target based on a measure characteristic of each of the irradiation lights.

The foregoing and/or other aspects are achieved by providing a system including at least two light irradiators oriented in different directions at a predetermined angle from each other, and at least two light receivers to receive irradiation lights from the at least two light irradiators, each of the at least two receivers being located at a predetermined position and oriented in a predetermined direction.

The system may include two light irradiators and three light receivers.

The irradiation lights may have different frequencies.

The irradiation lights may be irradiated simultaneously.

The irradiation lights may be irradiated sequentially.

The irradiation lights may be irradiated sequentially in a predetermined time slot.

The system may comprise an estimation apparatus to measure an attribute of each of the irradiation lights received by each of the at least two light receivers, and to estimate at least one of a position and a direction of a target based on the measured attribute.

The measured attribute may comprise one or more of an intensity of the irradiated lights, a light receiving directivity of the irradiated lights, and a light emitting directivity of the irradiated lights.

The foregoing and/or other aspects are achieved by providing a system for estimating a position and a direction of a target. The system includes a light emitter to emit light, a plurality of light receivers to receive at least a portion of the emitted light, and an estimation apparatus to estimate at least one of the position and the direction of the target based on a measured attribute of the emitted light received at each of the light receivers.

The attribute measured by the estimation apparatus may comprise one or more of an intensity of the emitted light, a light receiving directivity of the emitted light, and a light emitting directivity of the emitted light.

The light emitter may be incorporated into a handheld device and the handheld device is the target.

One or more of the plurality of light receivers may be incorporated into a hand held device and the hand held device is the target.

The light emitter may be incorporated into a video display.

One or more of the plurality of light receivers may incorporated into a video display.

The emitted light may be emitted in an infrared frequency range.

The emitted light may have a wavelength between 0.7 and 300 micrometers.

The light emitter may comprise a plurality of emitters, each emitter oriented to emit light in a different direction.

The system may comprise a controller to control the plurality of emitters to emit light sequentially.

The system may comprise a controller to control the plurality of emitters to emit light simultaneously, with each emitter emitting light at a wavelength that is different than any other emitter.

Each of the plurality of receivers may be positioned in a different location.

The light emitter may also function as an infrared light transmitter of a remote controller used to control the video display.

The foregoing and/or other aspects are achieved by providing a method of estimating a position and a direction of a target. The method includes emitting light from an emitter, receiving at least a portion of the emitted light at a plurality of light receivers, and estimating at least one of the position and the direction of the target based on a measured attribute of the emitted light received at each of the light receivers.

The measured attribute may comprise one or more of an intensity of the emitted light, a light receiving directivity of the emitted light, and a light emitting directivity of the emitted light.

BRIEF DESCRIPTION OF THE DRAWINGS

These and/or other aspects and advantages will become apparent and more readily appreciated from the following description of the embodiments, taken in conjunction with the accompanying drawings of which:

FIG. 1 illustrates an exemplary light emitting directivity of an infrared light, showing that a light receiving intensity varies depending on an orientation direction of emitted infrared light;

FIG. 2 illustrates an exemplary light emitting directivity and an exemplary light receiving directivity of infrared light;

FIG. 3 illustrates an exemplary configuration of a system for estimating a position and a direction of a remote apparatus based on a light emitting directivity and a light receiving directivity;

FIG. 4 schematically illustrates an exemplary system for estimating a 3D position and a direction of a remote apparatus when a single light irradiator is used;

FIG. 5 schematically illustrates an exemplary system for estimating a 3D position and a direction of a remote apparatus when two light irradiators are used;

FIG. 6 illustrates exemplary parameters used to perform calculation to estimate a position and a direction when two light irradiators are used;

FIG. 7 illustrates an exemplary flowchart for estimating a position and a direction of a remote apparatus when a single light irradiator is used;

FIG. 8 illustrates an exemplary flowchart for estimating a position and a direction of a remote apparatus when two light irradiators are used;

FIG. 9 illustrates another exemplary flowchart for estimating a position and a direction of a remote apparatus when two light irradiators are used; and

FIG. 10 illustrates another exemplary flowchart for estimating a position and a direction of a target.

DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

Infrared light may have a characteristic that a measured intensity varies depending on a distance between a light irradiator and a light receiver, an orientation direction of the light irradiator, and an orientation direction of the light receiver.

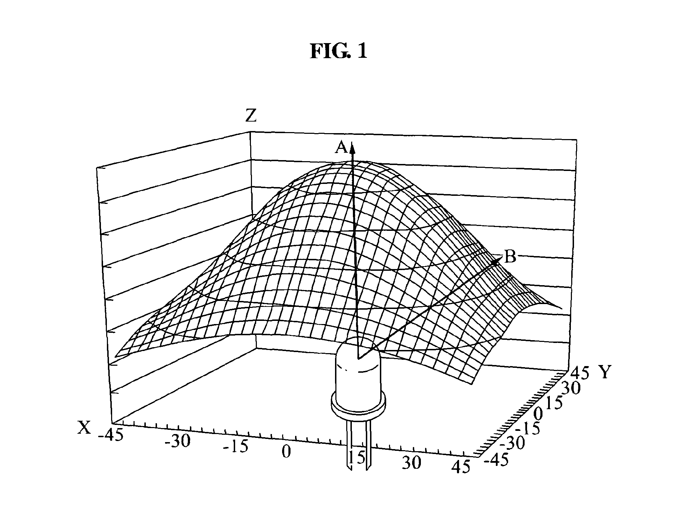

FIG. 1 illustrates an exemplary light emitting directivity of an infrared light, showing that a light receiving intensity varies depending on an orientation direction of emitted infrared light.

Referring to FIG. 1, the infrared light may have a characteristic that the light receiving intensity of the infrared light at a fixed distance where a light receiver is located varies depending on a direction of a light irradiator which is a direction of the infrared light. In a graph of FIG. 1, a Z-axis denotes an intensity of emitted infrared light, and an X-axis and a Y-axis denote angles measured between a light receiver and a light irradiator. Hereinafter, the light emitting directivity indicates that the light receiving intensity of the infrared light may vary depending on a direction of the emitted infrared light.

For example, an intensity of light measured in an A direction tends to be greater than an intensity of light measured in a B direction when the measurement points are at an equal distance from the light irradiator, which is located at an origin of A and B in Fig. 1.

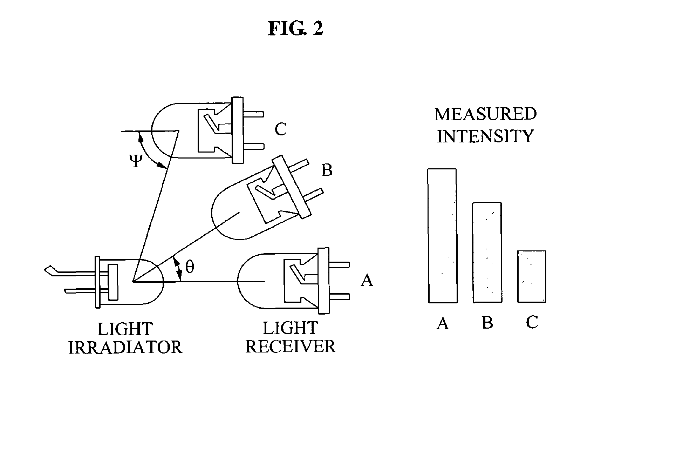

FIG. 2 illustrates a light emitting directivity and a light receiving directivity of infrared light.

Referring to FIG. 2, a light receiving intensity may vary depending on a direction angle at which the infrared light is emitted. For the light received at A and B shown in FIG.2, the direction angles of the emitted infrared light are "0" and "θ," respectively. Additionally, the light receiving intensity may be affected by a direction angle "ψ" which represents the direction at which the infrared light is received by a light receiver. Hereinafter, the light receiving directivity indicates that the light receiving intensity varies depending on the direction of the received infrared light.

A measured intensity based on a distance between a light irradiator and a light receiver may be represented by the following Equation 1:

[Equation 1]:

$$I \propto \frac{1}{r^2}$$

In Equation 1, *I* denotes the measured intensity, and *r* denotes the distance between the light irradiator and the light receiver.

A measured intensity based on an orientation direction of a light irradiator may be represented by the following Equation 2:

[Equation 2]:

$$I \propto \cos(\kappa\theta)$$

In Equation 2, *I* denotes the measured intensity, *k* denotes a variable representing an attenuation characteristic of the light irradiator, and θ denotes a direction angle of the light irradiator.

A measured intensity based on an orientation direction of a light receiver may be represented by the following Equation 3:

[Equation 3]:

$$I \propto \cos(\lambda\psi)$$

In Equation 3, *I* denotes the measured intensity, λ denotes a variable representing an attenuation characteristic of the light receiver, and $\psi$ denotes a direction angle of the light receiver.

An intensity of the infrared light may be measured based on all of the distance between the light irradiator and the light receiver, the orientation direction of the light irradiator, and the orientation direction of the light receiver, as shown in the following Equation 4:

[Equation 4]:

$$I = \alpha \cos(\kappa\theta) \cdot \frac{1}{r^2} \cdot \cos(\lambda\psi)$$

In Equation 4, *I* denotes the measured intensity, *r* denotes the distance between the light irradiator and the light receiver, α denotes a scale vector based on characteristics of the light irradiator and the light receiver, *k* denotes the variable representing the attenuation characteristic of the light irradiator, θ denotes the direction angle of the light irradiator, λ denotes the variable representing the attenuation characteristic of the light receiver, and ψ denotes the direction angle of the light receiver.

FIG. 3 illustrates an exemplary configuration of a system for estimating a position and a direction of a remote apparatus based on a light emitting directivity and a light receiving directivity.

The system of FIG. 3 may include, for example, a remote apparatus 310, an irradiation light transmitting apparatus 320, a light receiving apparatus 330, and an estimation apparatus 340.

The remote apparatus 310 may be a target whose position and direction are to be estimated, and may include the irradiation light transmitting apparatus 320. While the irradiation light transmitting apparatus 320 is illustrated as being included in the remote apparatus 310 as shown in FIG. 3, the remote apparatus 310 may alternatively include the light receiving apparatus 330 instead of the irradiation light transmitting apparatus 320. In other words, the remote apparatus 310 may include either the irradiation light transmitting apparatus 320 or the light receiving apparatus 330.

The irradiation light transmitting apparatus 320 may include, for example, light irradiators 321 and 322, and a controller 325. The irradiation light transmitting apparatus 320 may further include a modulation unit 323, and an encoder 324.

The light irradiators 321 and 322 may irradiate irradiation lights. For example, when the irradiation light transmitting apparatus 320 includes at least two light irradiators, the at least two light irradiators may be oriented in different directions, and angles between the directions may be set in advance. The irradiation light irradiated by the light irradiators 321 and 322 may be infrared light. The infrared light may have a wavelength between 0.7 and 300 micrometers, for example.

At least one of the light irradiators 321 and 322 may function as an infrared light transmitter of a remote controller used to control an electronic device.

The encoder 324 may encode irradiation light using different codes depending on whether the irradiation light is irradiated to detect the position and the direction of the remote apparatus 310, or to control the electronic device.

The modulation unit 323 may modulate the irradiation lights at a high-carrier frequency that is set in advance to be robust against an ambient light or a noise. Additionally, when at least two light irradiators exist, the modulation unit 323 may modulate irradiation lights to be output at different frequencies.

The controller 325 may control the light irradiators 321 and 322, the modulation unit 323, and the encoder 324. Specifically, when at least two light irradiators exist, the controller 325 may control the at least two light irradiators to sequentially irradiate irradiation lights. In this example, the sequential irradiation may include controlling each light irradiator to irradiate light in a different predetermined time slot from any other light irradiator. Here, prior to transmitting the irradiation lights, the controller 325 may have at least one of the at least two light irradiators transmit a synchronizing signal to the light receiving apparatus 330 , so that the irradiation light transmitting apparatus 320 may be synchronized with the light receiving apparatus 330.

Instead of sequential irradiation lights, the controller 325 may control the modulation unit 323 so that the at least two light irradiators simultaneously irradiate irradiation lights at different frequencies. The different frequencies may be chosen to minimize interference between the at least two irradiation lights.

The light receiving apparatus 330 may include light receivers 331, 332 and 334. The light receiving apparatus 330 may further include a filter 335, and a decoder 336.

The light receivers 331, 332 and 334 may receive the irradiation lights irradiated by the light irradiators 321 and 322. For example, when at least two light receivers exist, a position and an orientation direction of each of the at least two light receivers may be set in advance. In other words, the light receivers 331, 332 and 334 may be set to be located in different positions and to be oriented in different directions.

When irradiation lights are sequentially irradiated, the light receiving apparatus 330 may classify the at least two light irradiators in an order of irradiation lights received by the at least two light irradiators. Here, when the synchronizing signal is received prior to receiving irradiation lights from the irradiation light transmitting apparatus 320, the light receiving apparatus 330 may be synchronized with the irradiation light transmitting apparatus 320.

When irradiation lights are irradiated at different frequencies, the light receiving apparatus 330 may separate irradiation lights of different frequencies using the filter 335, and may classify the at least two light irradiators corresponding to frequencies set in advance.

The filter 335 may be used to analyze received irradiation lights for each frequency, when the irradiation lights are modulated at predetermined different frequencies and are simultaneously irradiated by the light irradiators 321 and 322.

The decoder 336 may decode irradiation light of a light irradiator functioning as the infrared light transmitter of the remote controller, and may determine whether the irradiation light is used to detect the position and direction of the remote apparatus 310, or to control an electronic device. When the irradiation light is determined to be used to detect the position and direction of the remote apparatus 310, the decoder 336 may provide the received irradiation light to the estimation apparatus 340.

The estimation apparatus 340 may include a signal intensity measurement unit 342, and a position/direction estimator 344. The signal intensity measurement unit 342 may measure an intensity of an irradiation light received by each of the light receivers 331, 332 and 334.

The position/direction estimator 344 may estimate a portion of, or all of the position (x, y, z) and the direction ($\phi$, $\theta$, $\psi$) of the target, for example, remote apparatus 310, based on the intensity of the irradiation light, a light receiving directivity, and a light emitting directivity. Here, the intensity, the light receiving directivity, and the light emitting directivity may vary depending on a distance of irradiation lights received by the light receivers.

Here, the position (x, y, z) and the direction ($\phi$, $\theta$, $\psi$) to be estimated by the position/direction estimator 344 may vary based on the number of light irradiators and the number of light receivers.

In an embodiment, a minimum combination of light irradiators and light receivers to estimate a part of the position (x, y, z) and the direction ($\phi$, $\theta$, $\psi$) is as follows. A combination of a single light irradiator and at least three light receivers, a combination of two light irradiators and at least two light receivers, and a combination of at least three light irradiators and at least one light receiver may be used.

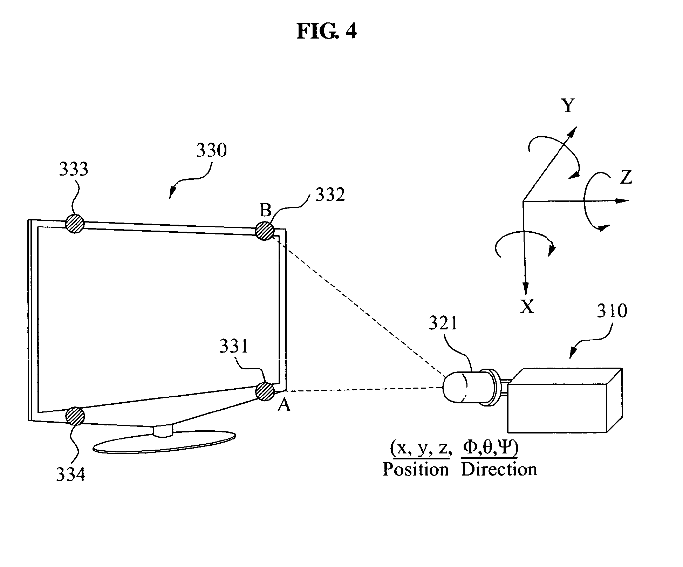

An example where the remote apparatus 310 includes the irradiation light transmitting apparatus 320 including a single light irradiator will be described with reference to FIG. 4.

FIG. 4 schematically illustrates an exemplary system for estimating a three-dimensional (3D) position and direction of a remote apparatus when a single light irradiator is used.

Referring to FIG. 4, when the remote apparatus 310 includes only the single light irradiator 321, the position/direction estimator 344 may estimate the position (x, y, z) and the direction ($\phi$, $\theta$, $\psi$) of the remote apparatus 310 based on the number of light receivers, as shown in Table 1 below for example. Here, x, y, and z are 3D coordinates, and $\phi$, $\theta$, and $\psi$ respectively denote a roll direction about a z-axis, a pitch direction about an x-axis, and a yaw direction about a y-axis. In Table 1, "○" indicates that estimation is possible, and "×" indicates that estimation is not possible.

[Table 1]:

| Number of light irradiators | Number of light receivers | Remote apparatus | | | | | |
|---|---|---|---|---|---|---|---|
| | | Position | | | Direction | | |
| | | x | y | z | $\phi$ | $\theta$ | $\psi$ |
| 1 | 5 | ○ | ○ | ○ | × | ○ | ○ |
| 1 | 4 | ○ | ○ | ○ | × | × | ○ |
| 1 | 4 | ○ | ○ | ○ | × | ○ | ○ |
| 1 | 3 | ○ | ○ | ○ | × | × | × |

Referring to Table 1, when the light irradiator 321 and three light receivers exist, and when all of three axis directions of the remote apparatus 310 are fixed, that is, when all of the roll $\phi$, the pitch $\theta$ and the yaw $\psi$ are fixed, the position/direction estimator 344 may estimate the 3D position (x, y, z) of the remote apparatus 310.

Conversely, even when three light irradiators and a single light receiver exist, when all of the roll $\phi$, the pitch $\theta$, and the yaw $\psi$ are fixed, the position/direction estimator 344 may also estimate the 3D position (x, y, z) of the remote apparatus 310.

Additionally, when the light irradiator 321 and four light receivers exist, and when the roll $\phi$ and the pitch $\theta$ are fixed, the position/direction estimator 344 may estimate the yaw $\psi$ and the 3D position (x, y, z) of the remote apparatus 310.

Conversely, even when four light irradiators and a single light receiver exist, when the roll $\phi$ and the pitch $\theta^{*}$ are fixed, the position/direction estimator 344 may also estimate the yaw $\psi$ and the 3D position (x, y, z) of the remote apparatus 310.

Furthermore, when the light irradiator 321 and four light receivers exist, and when the roll $\phi$ is fixed, the position/direction estimator 344 may estimate a 2D position (x, y) of the remote apparatus 310, and may estimate the pitch $\theta$ and the yaw $\psi$ that are directions on a 2D plane.

Conversely, even when four light irradiators and a single light receiver exist, when the roll $\phi$ is fixed, the position/direction estimator 344 may also estimate the 2D position of the remote apparatus 310, and the pitch $\theta$ and the yaw $\psi$.

Moreover, when the light irradiator 321 and five light receivers exist, and when the roll $\phi$ is fixed, the position/direction estimator 344 may estimate the 3D position (x, y, z) of the remote apparatus 310, and the pitch $\theta$ and the yaw $\psi$.

Conversely, even when five light irradiators and a single light receiver exist, when the roll $\phi$ is fixed, the position/direction estimator 344 may also estimate the 3D position (x, y, z) of the remote apparatus 310, and the pitch $\theta$ and the yaw $\psi$.

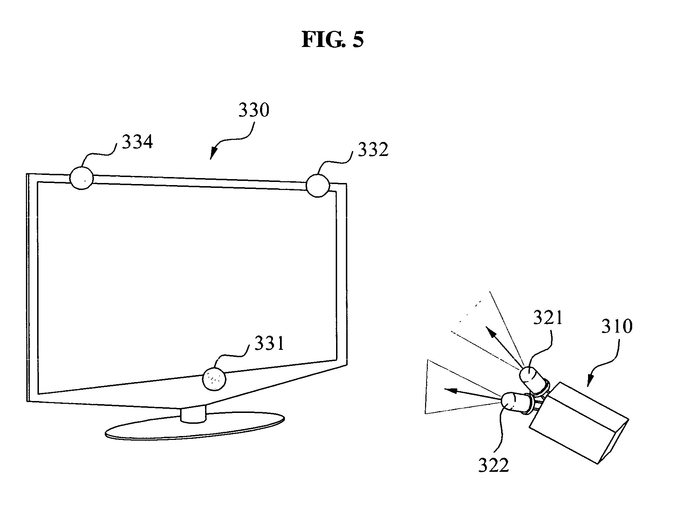

Hereinafter, an example where the remote apparatus 310 includes the irradiation light transmitting apparatus 320 including two light irradiators will be described with reference to FIG. 5.

FIG. 5 schematically illustrates an exemplary system for estimating the 3D position and the direction of a remote apparatus when two light irradiators exist.

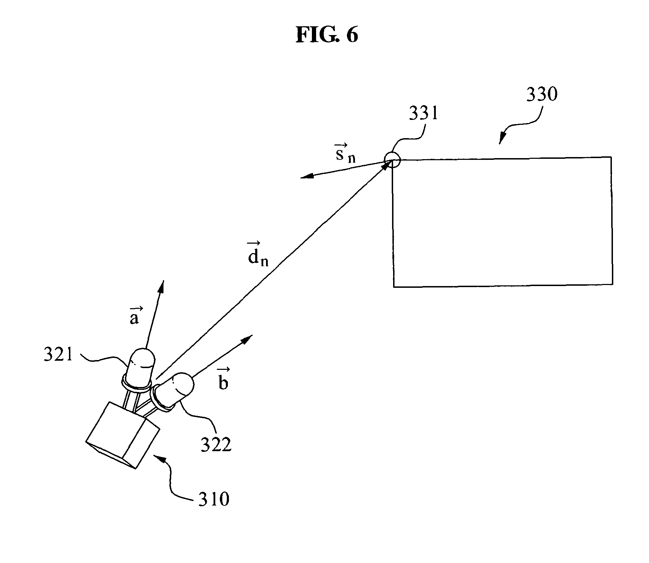

The position/direction estimator 344 may estimate the position (x, y, z) and the direction ($\phi$, $\theta$, $\psi$) of the remote apparatus 310, based on intensities of irradiation lights, the light receiving directivity, and the light emitting directivity. Here, the intensities, the light receiving directivity, and the light emitting directivity may vary depending on a distance of the irradiation lights received by the light receivers 331, 332, and 334. A method by which the position/direction estimator 344 estimates the position and the direction of the remote apparatus 310 will be further described with reference to FIG. 6.

FIG. 6 illustrates parameters used to perform calculation to estimate the 3D position and the direction of the remote apparatus 310 when the two light irradiators 321 and 322 exist.

Referring to FIG. 6, unit direction vectors of the light irradiators 321 and 322 and the light receiver 331 may be respectively defined as $\vec{a} = (x_a, y_a, z_a)$, $\vec{b} = (x_b, y_b, z_b)$, and $\vec{s}_n = (x_{sn}, y_{sn}, z_{sn})$ in a global coordinate system. Additionally, a direction vector representing a displacement from the light irradiators 321 and 322 to the light receiver 331 may be defined as $\vec{d}_n = (x_{dn}, y_{dn}, z_{dn})$.

When an angle between $\vec{d}_n$ and $\vec{a}$, and an angle between $\vec{d}_n$ and $\vec{b}$ are respectively indicated by $\theta_{an}$, and $\theta_{bn}$, and when $\lambda$ in Equation 4 is set to be '1' for convenience, an intensity of an irradiation light received by each of a plurality of light receivers may be represented by the following Equations 5 and 6:

[Equation 5]:

$$I_{na} = \alpha \cos\left( \kappa \cos^{-1}\left( \frac{\vec{a} \cdot \vec{d}}{|\vec{d}|} \right) \right) \cdot \frac{1}{|\vec{d}|^2} \cdot \frac{-\vec{s}_n \cdot \vec{d}}{|\vec{d}|}$$

In Equation 5, $I_{na}$ denotes the intensity of the irradiation light that is irradiated by the light irradiator 321 and is received by an n-th light receiver among the plurality of light receivers.

[Equation 6]:

$$I_{nb} = \alpha \cos\left( \kappa \cos^{-1}\left( \frac{\vec{b} \cdot \vec{d}}{|\vec{d}|} \right) \right) \cdot \frac{1}{|\vec{d}|^2} \cdot \frac{-\vec{s}_n \cdot \vec{d}}{|\vec{d}|}$$

In Equation 6, $I_{nb}$ denotes the intensity of the irradiation light that is irradiated by the light irradiator 322 and is received by the n-th light receiver.

In other words, when the irradiation lights are sequentially received from the two light irradiators 321 and 322 at different predetermined time slots, for example, or are received at different frequencies, as another example, Equations 5 and 6 may be independently obtained. Accordingly, each of the plurality of light receivers may acquire two equations.

For example, when three light receivers exist, six equations may be obtained with respect to the position and the direction of the remote apparatus 310.

When $\vec{a}$, $\vec{b}$, and $\vec{d}_n$ are obtained, both of the 3D position and the direction of the remote apparatus 310 are known. Accordingly, a problem of obtaining nine unknowns indicating each direction vector component is given. Since $\vec{a}$ and $\vec{b}$ denote unit vectors, $\vec{a}$ and $\vec{b}$ have a magnitude of '1', and a relative position relationship between $\vec{a}$ and $\vec{b}$ is set in advance. As a result, three equations may be further given.

Accordingly, a problem of obtaining nine unknowns from nine equations may be solved using a mathematical technique such as an optimization method. When the number of light receivers is increased, the problem may be considered as a normalization problem of minimizing errors.

When two light irradiators 321 and 322 are used, the position/direction estimator 344 may estimate the position (x, y, z) and the direction ($\phi$, $\theta$, $\psi$) of the remote apparatus 310, based on the number of light receivers, as shown in Table 2 below. Here, x, y, and z are 3D coordinates, and $\phi$, $\theta$, and $\psi$ respectively denote a roll direction about a z-axis, a pitch direction about an x-axis, and a yaw direction about a y-axis. In Table 2, '○' indicates that estimation is possible, and '×' indicates that estimation is not possible.

[Table 2]:

| Number of light irradiators | Number of light receivers | Remote apparatus | | | | | |
|---|---|---|---|---|---|---|---|
| | | Position | | | Direction | | |
| | | x | y | z | $\phi$ | $\theta$ | $\psi$ |
| 2 | 3 | ○ | ○ | ○ | ○ | ○ | ○ |
| 2 | 2 | ○ | ○ | × | × | ○ | ○ |

Referring to Table 2, when the two light irradiators 321 and 322 and three light receivers are used, the position/ direction estimator 344 may estimate the 3D position (x, y, z) of the remote apparatus 310, and the roll $\phi$, the pitch $\theta$ and the yaw $\psi$.

Conversely, even when three light irradiators and two light receivers exist, the position/direction estimator 344 may also estimate the 3D position (x, y, z) of the remote apparatus 310, and the roll $\phi$, the pitch $\theta$ and the yaw $\psi$.

Additionally, in Table 2, when the two light irradiators 321 and 322 and two light receivers exist, and when the roll $\phi$ is fixed, the position/direction estimator 344 may estimate the 2D position (x, y) of the remote apparatus 310, and may estimate the pitch $\theta$ and the yaw $\psi$ that are directions on a 2D plane.

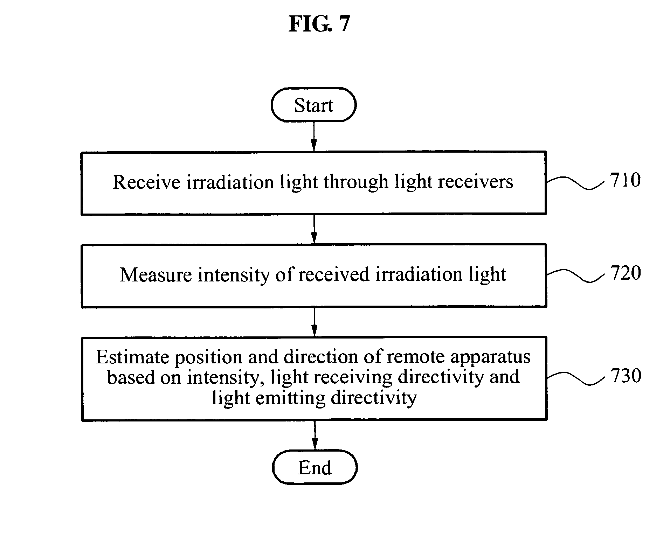

Hereinafter, a method of estimating a position and a direction of a remote apparatus configured as described above will be described with reference to FIGS. 7 through 9.

FIG. 7 illustrates an example of estimating a position and a direction of a remote apparatus when a single light irradiator exists.

Referring to FIG. 7, in operation 710, an estimation apparatus may receive an irradiation light through light receivers. In operation 720, the estimation apparatus may measure an intensity of the received irradiation light for each of the light receivers. In operation 730, the estimation apparatus may estimate a part of the position and the direction of the remote apparatus, based on the intensity of the irradiation light, a light receiving directivity and a light emitting directivity, as shown in Table 1 described above. Here, the intensity of the irradiation light, the light receiving directivity, and the light emitting directivity may vary depending on a distance of the irradiation light received at each of the light receivers.

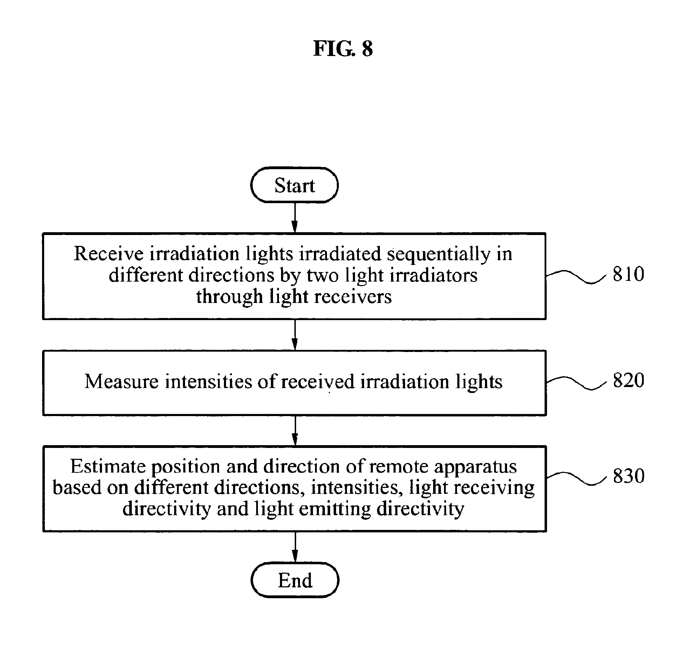

FIG. 8 illustrates an example of estimating a position and a direction of a remote apparatus when two light irradiators are used.

Referring to FIG. 8, in operation 810, an estimation apparatus may receive, through light receivers, irradiation lights that are sequentially irradiated by two light irradiators in different directions set in advance. In operation 820, the estimation apparatus may measure intensities of the received irradiation lights for each of the light receivers. In operation 830, the estimation apparatus may estimate the position and the direction of the remote apparatus, based on the different directions, the intensities of the irradiation lights, a light receiving directivity and a light emitting directivity. Here, when at least two light irradiators and at least three light receivers are used, both of a 3D position and up to three axis directions of the remote apparatus may be estimated.

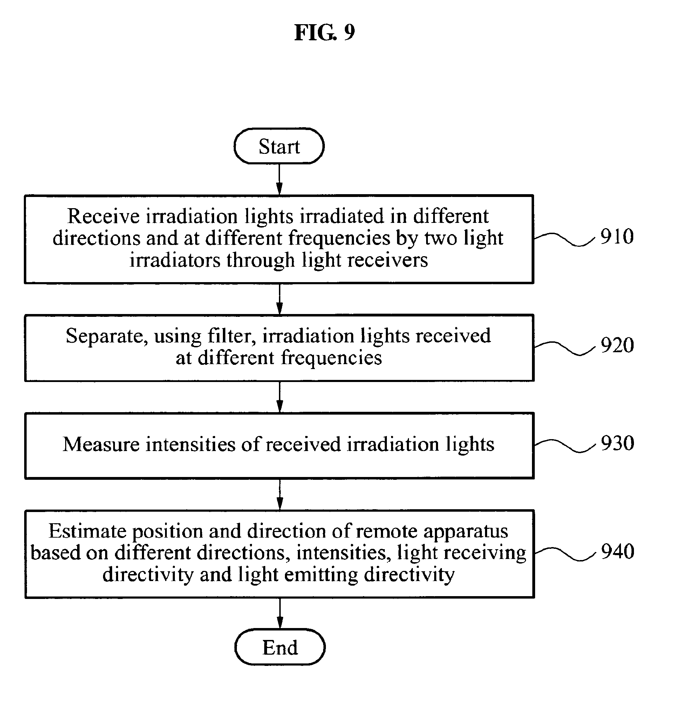

FIG. 9 illustrates another example of estimating a position and a direction of a remote apparatus when two light irradiators exist.

Referring to FIG. 9, in operation 910, an estimation apparatus may receive, through light receivers, irradiation lights that are irradiated in different directions and at different frequencies by two light irradiators. In operation 920, the estimation apparatus may separate, using a filter, the irradiation lights received at the different frequencies. The irradiation lights may be irradiated simultaneously by the two light irradiators.

In operation 930, the estimation apparatus may measure intensities of the received irradiation lights for each of the light receivers. In operation 940, the estimation apparatus may estimate the position and the direction of the remote apparatus, based on the different directions, the intensities of the irradiation lights, a light receiving directivity and a light emitting directivity. Here, when at least two light irradiators and at least three light receivers are used, both of a 3D position and up to three axis directions of the remote apparatus may be estimated.

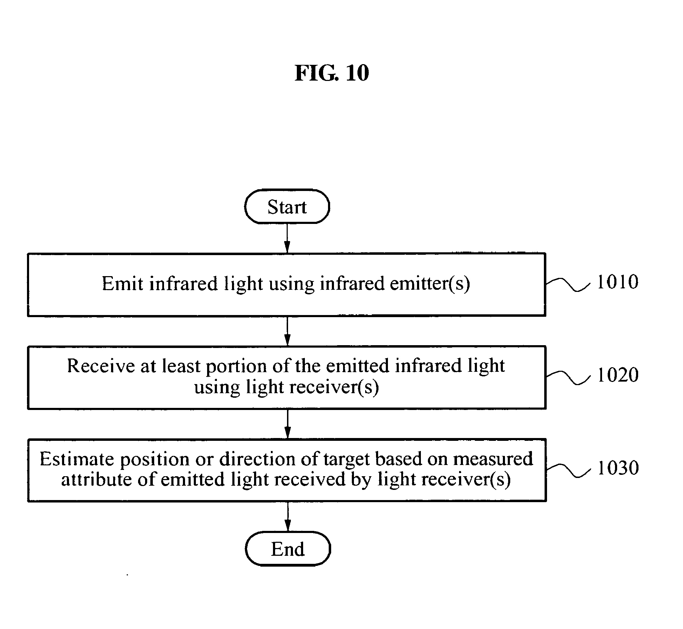

FIG. 10 illustrates another example of a method estimating a position and a direction of a target.

Referring to FIG. 10, in operation 1010, infrared light is emitted, for example, by one or more infrared emitters. In operation 1020, at least a portion of the emitted light is received, for example, by a plurality of infrared light receivers.

In operation 1030, at least one of a position and a direction of a target is estimated based on a measured attribute of the emitted light received at each of the light receivers. The target may be a remote control device that includes one of the one or more infrared emitters or the plurality of light receivers. The measured attribute may include one or more of an intensity of the emitted light, a light receiving directivity of the emitted light, and a light emitting directivity of the emitted light.

The method(s) according to the above-described embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the embodiments, or they may be of the kind well-known and available to those having skill in the computer software arts. The method(s) may be executed on a general purpose computer or processor or may be executed on a particular machine.

As described above, according to one or more embodiments of the present disclosure, a system and method for estimating a position and a direction using an infrared light may be provided to measure an intensity of an irradiation light irradiated by each light irradiator through each light receiver, and to estimate a position and a direction of a remote apparatus, based on the measured intensity, a light receiving directivity, and a light emitting directivity that vary depending on a distance of the irradiation light. Thus, it is possible to simultaneously estimate a position as well as a direction, and to implement an inexpensive and compact system based on the infrared light.

Although a few embodiments have been shown and described, it would be appreciated by those skilled in the art that changes may be made in these embodiments.

**Claims**

**1.** A system comprising:

an irradiation light transmitting apparatus (320) ;
a light receiving apparatus (330) ;
a remote apparatus (310) comprising one of the irradiation light transmitting apparatus or the light receiving apparatus;

wherein
the irradiation light transmitting apparatus comprises at least two light irradiators (321, 322) adapted to irradiate irradiation light and oriented in different directions; and
the light receiving apparatus comprises at least two light receivers (331, 332) adapted to receive the irradiation light and adapted to set a position and an orientation direction of each of the at least two light receivers in advance;
**characterized in that** the system further comprises an estimation apparatus (340) adapted to measure an intensity of the irradiation light received by each of the at least two light receivers, and to estimate a position and a direction of the remote apparatus based on the measured intensity, a light receiving directivity of the irradiated light, and a light emitting directivity of the irradiated light.

**2.** The system of any of the previous claims, wherein the irradiation light transmitting apparatus is adapted to control the at least two light irradiators to sequentially irradiate respective irradiation lights.

**3.** The system of claim 2, wherein the irradiation light transmitting apparatus is adapted to transmit a synchronizing signal to the light receiving apparatus to be synchronized with the light receiving apparatus, prior to transmitting the irradiation lights.

**4.** The system of any of the previous claims, wherein the at least two light irradiators are adapted to simultaneously irradiate irradiation lights at different frequencies.

**5.** The system of any of the previous claims, wherein the estimation apparatus is adapted to estimate

- a three-dimensional position of the remote apparatus based on the measured intensity; and/or
- at least one of a three dimensional position of the remote apparatus and an axis direction of the remote apparatus; and/or
- at least one of a two-dimensional position of the remote apparatus and two axis directions of the remote apparatus; and/or
- at least one of a three-dimensional position of the remote apparatus and two axis directions of the remote apparatus; and/or
- at least one of a two-dimensional position of the remote apparatus and two axis directions of the remote apparatus; and/or
- at least one of a three-dimensional position of the remote apparatus, and three axis directions of the remote apparatus.

6. The system of any of the previous claims, wherein at least one of the at least two light irradiator is also adapted to function as an infrared light transmitter, transmitting a signal used to remotely control an electronic device.

7. The system of any one of the previous claims, further comprising:

a controller (325) adapted to control the at least two light irradiators to sequentially irradiate the irradiation lights.

8. The system of any one of the previous claims, further comprising:

a modulation unit (323) adapted to modulate the irradiation lights so that the at least two light irradiators simultaneously irradiate irradiation lights of different frequencies.

9. The system of claim 7 or 8, wherein each of the at least two light irradiators is adapted to irradiate an infrared light.

10. The system of any one of the previous claims, wherein the at least two light receivers are adapted to sequentially receive the irradiation lights, and to classify the at least two light irradiators in an order of the irradiation lights received.

11. The system of any one of the claims 1-10, wherein the at least two receivers are adapted to receive irradiation lights modulated at different frequencies; and the at least two light receivers are adapted to separate, using a filter (335), the irradiation lights of the different frequencies, and to classify the at least two light irradiators.


**Patentansprüche**

1. System, umfassend:

eine Strahlungslichtsendevorrichtung (320);
eine Lichtempfangsvorrichtung (330);
eine entfernte Vorrichtung (310), die eine von der Strahlungslichtsendevorrichtung und der Lichtempfangsvorrichtung umfasst;

wobei
die Strahlungslichtsendevorrichtung zumindest zwei Lichtstrahler (321, 322) umfasst, die angepasst sind, um Strahlungslicht abzustrahlen, und die in unterschiedliche Richtungen ausgerichtet sind; und
die Lichtempfangsvorrichtung zumindest zwei Lichtempfänger (331, 332) umfasst, die angepasst sind, um das Strahlungslicht zu empfangen, und die angepasst sind, um eine Position und eine Ausrichtungsrichtung jedes der zumindest zwei Lichtempfänger im Voraus einzustellen;
**dadurch gekennzeichnet, dass** das System weiterhin eine Schätzvorrichtung (340) umfasst, die angepasst ist, um eine Intensität des von jedem der zumindest zwei Lichtempfänger empfangenen Strahlungslichts zu messen, und um eine Position und eine Richtung der entfernten Vorrichtung auf Grundlage der gemessenen Intensität, einer Lichtempfangsrichtcharakteristik des abgestrahlten Lichts und einer Lichtemissionsrichtcharakteristik des abgestrahlten Lichts zu schätzen.

2. System nach einem der vorstehenden Ansprüche, wobei die Strahlungslichtsendevorrichtung angepasst ist, um die zumindest zwei Lichtstrahler so zu steuern bzw. zu regeln, dass sie jeweilige Strahlungslichter sequentiell abstrahlen.

3. System nach Anspruch 2, wobei die Strahlungslichtsendevorrichtung angepasst ist, um ein Synchronisierungssignal an die mit der Strahlungslichtsendevorrichtung zu synchronisierende Lichtempfangsvorrichtung zu senden, vor Senden der Strahlungslichter.

4. System nach einem der vorstehenden Ansprüche, wobei die zumindest zwei Lichtstrahler angepasst sind, um gleichzeitig Strahlungslichter mit unterschiedlichen Frequenzen abzustrahlen.

5. System nach einem der vorstehenden Ansprüche, wobei die Schätzvorrichtung angepasst ist, um

- eine dreidimensionale Position der entfernten Vorrichtung auf Grundlage der gemessenen Intensität; und/oder
- zumindest eines von einer dreidimensionalen Position der entfernten Vorrichtung und einer Achsenrichtung der entfernten Vorrichtung; und/oder
- zumindest eines von einer zweidimensionalen Position der entfernten Vorrichtung und zwei Achsenrichtungen der entfernten Vorrichtung; und/oder
- zumindest eines von einer dreidimensionalen Position der entfernten Vorrichtung und zwei Achsenrichtungen der entfernten Vorrichtung; und/oder
- zumindest eines von einer zweidimensionalen Position der entfernten Vorrichtung und zwei Achsenrichtungen der entfernten Vorrichtung; und/oder
- zumindest eines von einer dreidimensionalen Position der entfernten Vorrichtung und drei Achsenrichtungen der entfernten Vorrichtung

zu schätzen.

6. System nach einem der vorstehenden Ansprüche, wobei zumindest einer der zumindest zwei Lichtstrahler weiterhin angepasst ist, um als Infrarotlichtsender zu fungieren, der ein Signal sendet, das zur Fernsteuerung eines elektronischen Geräts verwendet wird.

7. System nach einem der vorstehenden Ansprüche, das weiterhin umfasst:

einen Controller (325), der angepasst ist, um die zumindest zwei Lichtstrahler so zu steuern bzw. zu regeln, dass sie die Strahlungslichter sequentiell abstrahlen.

8. System nach einem der vorstehenden Ansprüche, das weiterhin umfasst:

eine Modulationseinheit (323), die angepasst ist, um die Strahlungslichter zu modulieren, so dass die zumindest zwei Lichtstrahler gleichzeitig Strahlungslichter unterschiedlicher Frequenzen abstrahlen.

9. System nach Anspruch 7 oder 8, wobei jeder der zumindest zwei Lichtstrahler angepasst ist, um ein Infrarotlicht abzustrahlen.

10. System nach einem der vorstehenden Ansprüche, wobei die zumindest zwei Lichtempfänger angepasst sind, um die Strahlungslichter sequentiell zu empfangen, und um die zumindest zwei Lichtstrahler in Reihenfolge der empfangenen Strahlungslichter zu klassifizieren.

11. System nach einem der Ansprüche 1-10, wobei die zumindest zwei Empfänger angepasst sind, um mit unterschiedlichen Frequenzen modulierte Strahlungslichter zu empfangen; und die zumindest zwei Lichtempfänger angepasst sind, um, mittels eines Filters (335), die Strahlungslichter mit den unterschiedlichen Frequenzen zu trennen, und um die zumindest zwei Lichtstrahler zu klassifizieren.

**Revendications**

1. Système comprenant :

un appareil d'émission de lumière d'irradiation (320) un appareil de réception de lumière (330)
un appareil distant (310) comprenant l'appareil d'émission de lumière d'irradiation ou bien l'appareil de réception de lumière ;
dans lequel
l'appareil d'émission de lumière d'irradiation comprend au moins deux irradiateurs de lumière (321, 322) adaptés pour irradier de la lumière d'irradiation et orientés dans des directions différentes ; et
l'appareil de réception de lumière comprend au moins deux récepteurs de lumière (331, 332) adaptés pour recevoir de la lumière d'irradiation et adaptés pour établir une position et une direction d'orientation de chacun des au moins deux récepteurs de lumière par avance ;
**caractérisé en ce que** le système comprend en outre un appareil d'estimation (340) adapté pour mesurer l'intensité de la lumière d'irradiation reçue par chacun des au moins deux récepteurs de lumière, et pour estimer la position et
la direction de l'appareil distant en fonction de l'intensité mesurée, la directivité de réception de la lumière irradiée et la directivité d'émission de la lumière irradiée.

2. Système selon la revendication 1, dans lequel l'appareil d'émission de lumière d'irradiation est adapté pour commander les au moins deux irradiateurs de lumière afin qu'ils irradient successivement des lumières d'irradiation respectives.

3. Système selon la revendication 2, dans lequel l'appareil d'émission de lumière d'irradiation est adapté pour émettre un signal de synchronisation à destination de l'appareil de réception de lumière pour être en synchronisation avec l'appareil de réception de lumière, préalablement à l'émission des lumières d'irradiation.

4. Système selon l'une quelconque des revendications précédentes, dans lequel les au moins deux irradiateurs de lumière sont adaptés pour irradier simultanément des lumières d'irradiation à différentes fréquences.

5. Système selon l'une quelconque des revendications précédentes, dans lequel l'appareil d'estimation est adapté pour estimer

- une position tridimensionnelle de l'appareil distant en fonction de l'intensité mesurée ; et/ou
- une position tridimensionnelle de l'appareil distant ou bien une direction d'axe de l'appareil distant ; et/ou
- une position bidimensionnelle de l'appareil distant ou bien deux directions d'axe de l'appareil distant ; et/ou
- une position tridimensionnelle de l'appareil distant ou bien deux directions d'axe de l'appareil distant ; et/ou
- une position bidimensionnelle de l'appareil distant ou bien deux directions d'axe de l'appareil distant ; et/ou
- une position tridimensionnelle de l'appareil distant, ou bien trois directions d'axe de l'appareil distant.

6. Système selon l'une quelconque des revendications précédentes, dans lequel l'un au moins des au moins deux irradiateurs de lumière est également adapté pour avoir fonction d'émetteur de lumière infrarouge, en émettant un signal utilisé pour commander à distance un dispositif électronique.

7. Système selon l'une quelconque des revendications précédentes, comprenant en outre :

un dispositif de commande (325) adapté pour commander les au moins deux irradiateurs de lumière afin qu'ils irradient successivement les lumières d'irradiation.

8. Système selon l'une quelconque des revendications précédentes, comprenant en outre :

une unité de modulation (323) adaptée pour moduler les lumières d'irradiation de manière que les au moins deux irradiateurs de lumière irradient simultanément des lumières d'irradiation de différentes fréquences.

9. Système selon la revendication 7 ou 8, dans lequel chacun des au moins deux irradiateurs de lumière est adapté pour irradier de la lumière infrarouge.

10. Système selon l'une quelconque des revendications précédentes, dans lequel les au moins deux récepteurs de lumière sont adaptés pour recevoir successivement les lumières d'irradiation et pour classer les au moins deux irradiateurs de lumière selon l'ordre des lumières d'irradiation reçues.

11. Système selon l'une quelconque des revendications 1 à 10, dans lequel les au moins deux récepteurs sont adaptés pour recevoir des lumières d'irradiation modulées en différentes fréquences ; et les au moins deux récepteurs de lumière sont adaptés pour séparer, au moyen d'un filtre (335), les lumières d'irradiation des différentes fréquences, et pour classer les au moins deux irradiateurs de lumière.

**FIG. 1**

# FIG. 2

LIGHT
IRRADIATOR

LIGHT
RECEIVER

MEASURED
INTENSITY

A    B    C

**FIG. 3**

310

REMOTE APPARATUS — 320

330

LIGHT RECEIVING APPARATUS

IRRADIATION LIGHT TRANSMITTING APPARATUS

335

FILTER

331
LIGHT RECEIVER

332
LIGHT RECEIVER

336

DECODER

334
LIGHT RECEIVER

321
LIGHT IRRADIATOR

322
LIGHT IRRADIATOR

323
MODULATION UNIT

324
ENCODER

325
CONTROLLER

ESTIMATION APPARATUS — 340

342
SIGNAL INTENSITY MEASUREMENT UNIT

344
POSITION/ DIRECTION ESTIMATOR

EP 2 385 390 B1

16

# FIG. 4

## FIG. 5

# FIG. 6

# FIG. 7

Start

Receive irradiation light through light receivers    710

Measure intensity of received irradiation light    720

Estimate position and direction of remote apparatus based on intensity, light receiving directivity and light emitting directivity    730

End

# FIG. 8

```
              ( Start )
                 │
                 ▼
┌─────────────────────────────────────────┐
│ Receive irradiation lights irradiated    │
│ sequentially in different directions by  │──── 810
│ two light irradiators through light      │
│ receivers                                │
└─────────────────────────────────────────┘
                 │
                 ▼
┌─────────────────────────────────────────┐
│ Measure intensities of received          │──── 820
│ irradiation lights                       │
└─────────────────────────────────────────┘
                 │
                 ▼
┌─────────────────────────────────────────┐
│ Estimate position and direction of       │
│ remote apparatus based on different      │──── 830
│ directions, intensities, light receiving │
│ directivity and light emitting directivity│
└─────────────────────────────────────────┘
                 │
                 ▼
              (  End  )
```

# FIG. 9

```
        ( Start )
            │
            ▼
┌──────────────────────────────────┐
│ Receive irradiation lights irradiated in different │
│ directions and at different frequencies by two light │      910
│ irradiators through light receivers │
└──────────────────────────────────┘
            │
            ▼
┌──────────────────────────────────┐
│ Separate, using filter, irradiation lights received │      920
│ at different frequencies │
└──────────────────────────────────┘
            │
            ▼
┌──────────────────────────────────┐
│ Measure intensities of received irradiation lights │      930
└──────────────────────────────────┘
            │
            ▼
┌──────────────────────────────────┐
│ Estimate position and direction of remote apparatus │
│ based on different directions, intensities, light receiving │  940
│ directivity and light emitting directivity │
└──────────────────────────────────┘
            │
            ▼
        ( End )
```

# FIG. 10

```
                    ┌─────────────┐
                    │    Start    │
                    └──────┬──────┘
                           │
                           ▼
┌──────────────────────────────────────────────────┐
│     Emit infrared light using infrared emitter(s) │  ⌇ 1010
└──────────────────────────┬───────────────────────┘
                           │
                           ▼
┌──────────────────────────────────────────────────┐
│   Receive at least portion of the emitted infrared light │  ⌇ 1020
│              using light receiver(s)              │
└──────────────────────────┬───────────────────────┘
                           │
                           ▼
┌──────────────────────────────────────────────────┐
│ Estimate position or direction of target based on measured │  ⌇ 1030
│  attribute of emitted light received by light receiver(s) │
└──────────────────────────┬───────────────────────┘
                           │
                           ▼
                    ┌─────────────┐
                    │     End     │
                    └─────────────┘
```

**EP 2 385 390 B1**

## REFERENCES CITED IN THE DESCRIPTION

### Patent documents cited in the description

- US 2003107737 A
- WO 9635960 A